# EUROPEAN PATENT SPECIFICATION

(11) **EP 3 671 145 B1**
(45) Date of publication and mention of the grant of the patent: **13.12.2023**
(21) Application number: 19189358.5
(22) Date of filing: 31.07.2019
(51) Int. Cl.: G01H 3/10

(54) **VEHICLE SOUND EVALUATION SYSTEM AND VEHICLE SOUND EVALUATION DEVICE**
FAHRZEUGGERÄUSCHBEWERTUNGSSYSTEM UND FAHRZEUGGERÄUSCHBEWERTUNGSVORRICHTUNG
SYSTÈME ET DISPOSITIF D'ÉVALUATION DE BRUITS DE VÉHICULE

(30) Priority: 21.12.2018 JP 2018239831
(43) Date of publication of application: 24.06.2020
(73) Proprietor: National Agency For Automobile And Land Transport Technology, Shinjuku-ku Tokyo 160-0003 (JP)
(72) Inventor: HOZU, Hiroyuki, Tokyo, 160-0003 (JP)
(74) Representative: Rings, Rolf

(56) References cited:
- JP-A- 2005 338 453
- JP-B1- 6 260 979
- US-A1- 2013 010 980
- US-A1- 2016 064 000

## Description

### BACKGROUND

### 1. Technical Field

The present invention relates to a vehicle sound evaluation system that evaluates a sound emitted from a traveling vehicle, and a vehicle sound evaluation device.

### 2. Related Art

Conventionally, there is proposed, for example, a sound source probing system in JP-A-2015-152315 or the like as means to identify a vehicle (high noise vehicle) that is emitting a noise equal to or more than a regulation by, for example, an installation of an altered muffler and the like, from vehicles, such as automobiles and motorcycles, that are traveling on a road (vehicular lane).

In JP-A-2015-152315, there is disclosed a sound source probing system that includes: a microphone array that includes a plurality of microphones arranged toward a road and in a vertical direction on a side of the road; a camera that photographs a vehicle passing through the road; and a personal computer for sound source analysis that establishes a reflector model of a sound emitted from a vehicle traveling on the road based on preset information indicating a sound reflector on road periphery and a photographed image obtained by photographing with the camera, and probes a sound source on the road by executing a delay addition operation that incorporates a delay of a sound propagation caused by a reflection by the reflector model into a plurality of sound signals.

Here, in cracking down on a high noise vehicle, a noise test (proximity stationary noise test) targeting a vehicle in a stopped state is used. That is, in order to execute the noise test, it is necessary to stop the vehicle suspected to be emitting a high noise, and this expends a considerable work. In order to stop a vehicle, a reason to stop the vehicle is required, and therefore, an evaluation of a sound emitted from a traveling vehicle requires accuracy.

In this respect, while the sound source probing system in JP-A-2015-152315 can perform an evaluation with accuracy to some extent, it is not possible to consider a change and the like of a sound source in association with a slight difference of a peripheral environment, and therefore, accuracy sufficient enough to be usable as the reason to stop a vehicle cannot be obtained.

A further prior art according to JP 6260979 B1 discloses an event evaluation support system, with which an improvement of the accuracy of evaluating future events on the basis of video data including images and sounds is provided. This system uses a reference database for past video data and reference data and includes the use of different degrees of association between the video data and the past video data in order to make better evaluations of events which will occur in the future on the basis of current video data.

US 2016/064000 A1 discloses a sound source-separating device, in which a sound source direction-estimating part is used in order to distinguish between a first sound source direction and a second sound source direction to provide an estimated sound source direction and an evaluation of a first sound signal.

In a prior art of JP 2005338453 A, a device and program for sound simulation in a vehicle cabin is described. This device uses a reproduction/regeneration sound, to which a noise is added in a sound-field tuning part. Afterwards, the tone quality and different listening positions in the vehicle interior are evaluated in this sound simulation system in order to replace an estimated computer simulation of the sound of the vehicle compartment interior.

US 2013/0010980 A1 relates to a vehicle direction identification device, by means of which a user vehicle may detect the direction of a further vehicle by the sound identification device. This prior art describes the problem and a possible solution for the identification of a vehicle sound source even in case there are problems of a sound direction identification due to blind spots of the other vehicles shielded by a barrier or the like, by means of which the vehicle sound is reflected.

Therefore, the present invention has been invented in consideration of the above-described problems. An object of the present invention is to provide a vehicle sound evaluation system that ensures obtaining a highly accurate evaluation result and a vehicle sound evaluation device.

This problem is solved by means of a vehicle sound evaluation system with the features of claim 1. Preferred forms of realization of the invention are defined in dependent claims.

### SUMMARY

A vehicle sound evaluation system according to claim 1 is a vehicle sound evaluation system that evaluates a sound emitted from a vehicle that is traveling.

The vehicle sound evaluation system includes obtaining means, generating means, a reference database, and deriving means. The obtaining means obtains time waveform data based on the sound. The generating means generates a plurality of evaluation images indicating a time axis, a frequency axis, and a signal strength based on a part of the time waveform data. The reference database stores an association between a preliminarily obtained past evaluation image and reference data associated with the past evaluation image. The deriving means refers to the reference database to derive an evaluation result for the plurality of evaluation images.

The vehicle sound evaluation system according to a second invention, which is in the first invention, the reference database is established by machine learning using the past evaluation image and the reference data as learning data.

The vehicle sound evaluation system according to a third invention, which is in the first invention or the second invention, the reference data includes a plurality of evaluation standards, the deriving means selects the evaluation standard associated with each of the plurality of evaluation images, and generates a determination result that has determined whether a feature of the sound is normal or not for each of the plurality of evaluation standards to derive the evaluation result based on the plurality of determination results.

The vehicle sound evaluation system according to a fourth invention, which is in any one of the first invention to the third invention, the obtaining means includes extracting means that, from a group of time waveform data obtained from a sensor array including a plurality of sound sensors arranged toward a road, extracts the time waveform data based on the sound emitted at an evaluation position preliminarily set within the road.

A vehicle sound evaluation device according to a fifth invention is a vehicle sound evaluation device that evaluates a sound emitted from a vehicle that is traveling. The vehicle sound evaluation device includes an obtaining unit, a generating unit, a reference database, and a deriving unit. The obtaining unit obtains time waveform data based on the sound. The generating unit generates a plurality of evaluation images indicating a time axis, a frequency axis, and a signal strength based on a part of the time waveform data. The reference database stores an association between a preliminarily obtained past evaluation image and reference data associated with the past evaluation image. The deriving unit refers to the reference database to derive an evaluation result for the plurality of evaluation images.

According to the first invention to the fourth invention, the deriving means refers to the reference database to derive the evaluation result for the plurality of evaluation images. In view of this, it is possible to execute the evaluation based on the past evaluation image and the reference data including the sound difference and the like in association with a slight difference of the peripheral environment. This ensures obtaining a highly accurate evaluation result.

According to the first invention to the fourth invention, the generating means generates the plurality of evaluation images based on the part of the time waveform data. In view of this, for example, even when a fixed sound sensor is used, the sound during a certain period from the vehicle approaches till the vehicle moves away can be comprehensively evaluated. This ensures quantitatively evaluating the sound specific to the traveling vehicle.

In particular, according to the second invention, the reference database is established by the machine learning using the past evaluation image and the reference data as the learning data. In view of this, compared with a case where a threshold value is set for a loudness of sound or a similar case, the evaluation from which a subj ective view is eliminated can be executed. This ensures a reduced variation of the evaluation results.

In particular, according to the third invention, the deriving means selects the evaluation standard associated with each of the plurality of evaluation images in the reference data, and generates the determination result that has determined whether a feature of the sound is normal or not based on the plurality of evaluation standards to derive the evaluation result based on the plurality of determination results. In view of this, selecting the evaluation standard associated with each of the evaluation images ensures obtaining the comprehensive evaluation result after executing the determinations independently for each evaluation image. This ensures obtaining the highly accurate evaluation result even when, for example, the traveling sound varies due to the shape of the road surface and the like.

In particular, according to the fourth invention, the extracting means extracts the time waveform data based on the sound emitted at the evaluation position from the group of the time waveform data obtained from the sensor array. In view of this, the environmental sound (noise) emitted from the peripheral environment can be easily removed. This ensures obtaining further highly accurate evaluation result. In particular, fixing the evaluation position ensures the reduced number of the past evaluation images necessary for establishing the reference database. This ensures achieving the reduced time for preparing the past evaluation images and the reduced data capacity stored in the reference database.

According to the fifth invention, the deriving unit refers to the reference database to derive the evaluation result for the plurality of evaluation images. In view of this, it is possible to execute the evaluation based on the past evaluation image and the reference data including the sound difference and the like in association with a slight difference of the peripheral environment. This ensures obtaining a highly accurate evaluation result.

According to the fifth invention, the generating unit generates the plurality of evaluation images based on the part of the time waveform data. In view of this, for example, even when a fixed sound sensor is used, the sound during a certain period from the vehicle approaches till the vehicle moves away can be comprehensively evaluated. This ensures quantitatively evaluating the sound specific to the traveling vehicle.

### BRIEF DESCRIPTION OF THE DRAWINGS

FIG. 1A is a schematic diagram illustrating an example of an outline of a vehicle sound evaluation system and a vehicle sound evaluation device according to an embodiment, and FIG. 1B is a schematic diagram illustrating another example of the outline of the vehicle sound evaluation system and the vehicle sound evaluation device according to the embodiment;
FIG. 2A is a schematic diagram illustrating an example of time waveform data, FIG. 2B is a schematic diagram illustrating an example of an evaluation image, and FIG. 2C is a schematic diagram illustrating relationships between a part of the time waveform data and the evaluation images;
FIG. 3A is a schematic diagram illustrating an example of a configuration of the vehicle sound evaluation device according to the embodiment, and FIG. 3B and FIG. 3C are schematic diagrams illustrating an example of a function of the vehicle sound evaluation device according to the embodiment;
FIG. 4 is a schematic diagram illustrating an example of a reference database;
FIG. 5 is a schematic diagram illustrating another example of the reference database; and
FIG. 6 is a flowchart illustrating an example of an operation of the vehicle sound evaluation system according to the embodiment.

### DETAILED DESCRIPTION

The following describes an example of a vehicle sound evaluation system and a vehicle sound evaluation device according to an embodiment to which the present invention is applied with reference to the drawings.

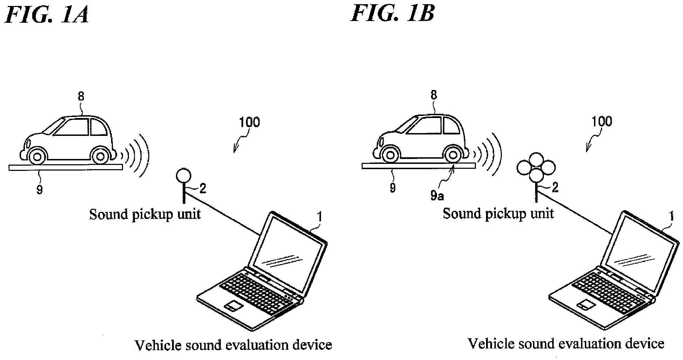

With reference to FIG. 1A and FIG. 1B, an example of a vehicle sound evaluation system 100 and a vehicle sound evaluation device 1 according to the embodiment will be described. FIG. 1A is a schematic diagram illustrating an example of an outline of the vehicle sound evaluation system 100 and the vehicle sound evaluation device 1 according to the embodiment. FIG. 1B is a schematic diagram illustrating another example of the outline of the vehicle sound evaluation system 100 and the vehicle sound evaluation device 1 according to the embodiment.

The vehicle sound evaluation system 100 evaluates a sound emitted from a vehicle 8 that is traveling on a road 9. The vehicle sound evaluation system 100 is, for example, used for cracking down on a high noise vehicle. Using the vehicle sound evaluation system 100 can, for example, consider a change and the like of a sound source in association with a slight difference of a peripheral environment. In view of this, it is possible to obtain a highly accurate evaluation result enough to be usable as a reason to stop the vehicle 8. The vehicle sound evaluation system 100 includes the vehicle sound evaluation device 1 and a sound pickup device 2.

The vehicle sound evaluation device 1 is coupled to the sound pickup device 2 via data communication means with or without wire. The vehicle sound evaluation device 1 is, for example, operated by a user who performs a crackdown. As the vehicle sound evaluation device 1, for example, an electronic device, such as a personal computer (PC) is used.

The sound pickup device 2 is installed at a position separated from the vehicle 8, such as on a side and an upper side of the road 9, and is, for example, used in a state where it is fixed by a fixture or the like. The sound pickup device 2 picks up a sound emitted from the traveling vehicle 8. The sound pickup device 2 generates, for example, time waveform data based on the picked-up sound. The time waveform data can be generated by a known technique, and may be, for example, generated by the vehicle sound evaluation device 1 (for example, an obtaining unit 11).

As the sound pickup device 2, for example, a microphone (sound sensor) illustrated in FIG. 1A is used, and besides, for example, a sensor array that includes a plurality of microphones arranged toward the road 9 may be used as illustrated in FIG. 1B. When the sensor array is used as the sound pickup device 2, it is possible to easily achieve to generate time waveform data limited to a sound emitted at an evaluation position 9a preliminarily set within the road. An arrangement and the number of the microphones can be conveniently set.

The vehicle sound evaluation device 1 obtains the time waveform data from the sound pickup device 2, and generates a plurality of evaluation images based on the time waveform data. The vehicle sound evaluation device 1 refers to a reference database, which will be described later, to derive an evaluation result for the plurality of evaluation images. This ensures obtaining the evaluation result for the sound emitted from the traveling vehicle 8.

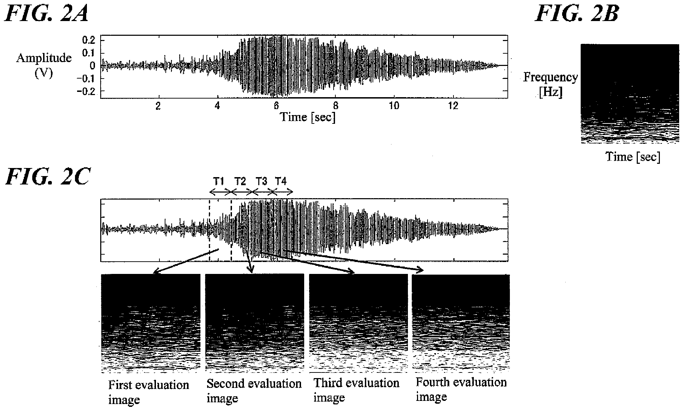

The time waveform data of a sound pressure can be, for example, as illustrated in FIG. 2A, expressed in a graph with a time (sec) on a horizontal axis and an amplitude (V) on a vertical axis. The time waveform data is generated based on a sound emitted in a time period from the vehicle 8 approaches the sound pickup device 2 till the vehicle 8 moves away from the sound pickup device 2. This indicates, for example, a time period of approximately one to two seconds, and can be conveniently set. The time waveform data is, for example, generated targeting an exhaust noise and the like of the vehicle 8, and indicates, for example, an amplitude of -1 to 1, and can be conveniently set.

The evaluation image can, for example, as illustrated in FIG. 2B, be expressed in a three-dimensional graph (image) that expresses a signal strength (amplitude) in color with respect to a time (sec) on a horizontal axis and a frequency (Hz) on a vertical axis. As the evaluation image, for example, a result transformed from the time waveform data using Fourier transformation (for example, short-time Fourier transformation) is used, and, for example, a spectrogram is used. The evaluation image indicates, for example, a period of approximately 0.01 seconds to 0.04 seconds, a frequency of approximately 0 Hz to 20 kHz, and a signal strength of 0 to 1 normalized with the maximum value during the target period. In FIG. 2B, a part where the signal strength cannot be obtained is shown in black, and as the signal strength strengthens, the part is shown in white. The evaluation image is saved in the vehicle sound evaluation device 1 in an image data format based on the spectrogram or the like, and besides, for example, the evaluation image may be saved in the vehicle sound evaluation device 1 in a format of a numerical value, a matrix, a histogram, or the like.

In the embodiment, for example, as illustrated in FIG. 2C, the plurality of evaluation images (in FIG. 2C, a first evaluation image to a fourth evaluation image) are generated based on a part of the time waveform data. Each of the evaluation images are generated using the Fourier transformation or the like by covering time periods (in FIG. 2C, a first period T1 to a fourth period T4) that are each different in the time waveform data.

For example, in the time waveform data, the first evaluation image is generated by covering the first period T1, the second evaluation image is generated by covering the second period T2, the third evaluation image is generated by covering the third period T3, and the fourth evaluation image is generated by covering the fourth period T4. Each of the time periods may be separated from one another or may partly overlap.

### (Vehicle Sound Evaluation Device 1)

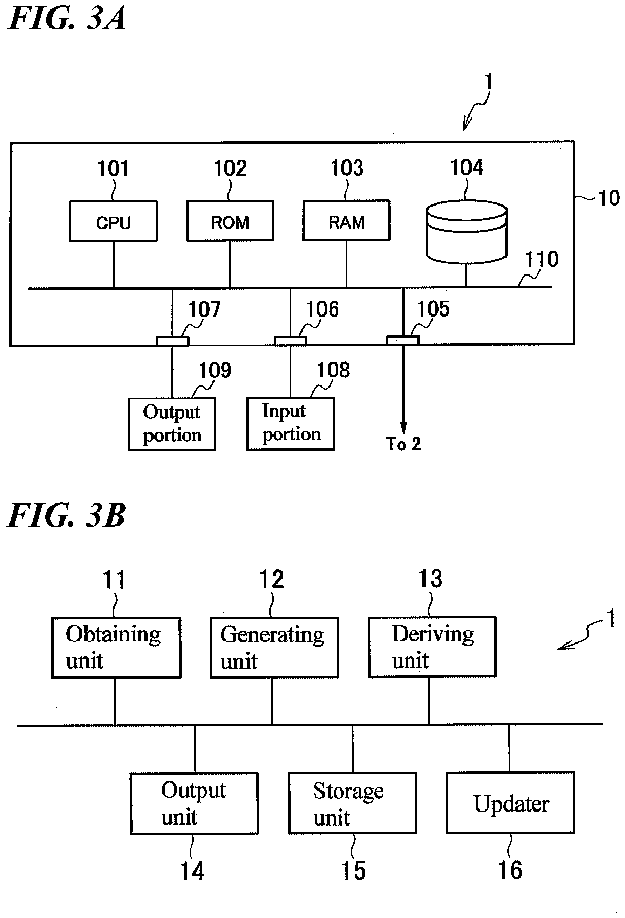

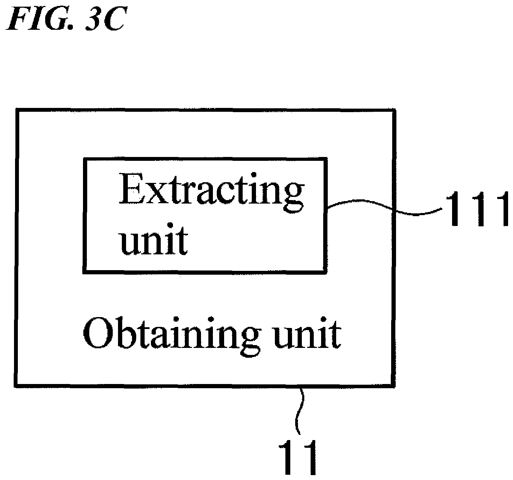

Next, with reference to FIG. 3A to FIG. 3C, an example of the vehicle sound evaluation device 1 according to the embodiment will be described. FIG. 3A is a schematic diagram illustrating an example of a configuration of the vehicle sound evaluation device 1 according to the embodiment. FIG. 3B and FIG. 3C are schematic diagrams illustrating an example of a function of the vehicle sound evaluation device 1 according to the embodiment.

As the vehicle sound evaluation device 1, an electronic device, such as a laptop (notebook) PC or a desktop PC, is used, and besides, for example, an electronic device, such as a smart phone and a tablet type terminal, may be used. The vehicle sound evaluation device 1, for example, as illustrated in FIG. 3A, includes a housing 10, a Central Processing Unit (CPU) 101, a Read Only Memory (ROM) 102, a Random Access Memory (RAM) 103, a saving unit 104, and I/Fs 105 to 107. Each of the components 101 to 107 are coupled by an internal bus 110.

The CPU 101 controls the whole vehicle sound evaluation device 1. The ROM 102 stores an operation code of the CPU 101. The RAM 103 is a working area used when the CPU 101 operates. The saving unit 104 stores various information, such as the time waveform data. As the saving unit 104, for example, besides a Hard Disk Drive (HDD), a data storage device, such as a solid state drive (SSD), is used. For example, the vehicle sound evaluation device 1 may include a Graphics Processing Unit (GPU) (not illustrated). Including the GPU ensures arithmetic processing at a speed higher than that in an ordinary case.

The I/F 105 is an interface for transmitting and receiving various information with the sound pickup device 2 via the data communication means, and may be, for example, used for transmitting and receiving various information with other terminals and the like. The I/F 106 is an interface for transmitting and receiving information with an input portion 108. As the input portion 108, for example, a keyboard is used. The user of the vehicle sound evaluation device 1 inputs various information, or a control command and the like of the vehicle sound evaluation device 1 or the sound pickup device 2 via the input portion 108. The I/F 107 is an interface for transmitting and receiving various information with an output portion 109. The output portion 109 outputs various information saved in the saving unit 104, or process situation and the like of the vehicle sound evaluation device 1 or the sound pickup device 2. As the output portion 109, a display is used, and, for example, it may be of a touchscreen type.

### <Reference Database>

In the saving unit 104, the reference database that stores an association between a preliminarily obtained past evaluation image and reference data is saved. The reference database is, for example, formed by an algorithm that calculates a degree of association using past evaluation information and reference data.

The reference database is, for example, established by known machine learning using the past evaluation image and the reference data as learning data, and, for example, deep learning is used as the machine learning. In this case, the association is updated as necessary in a process of the machine learning, and, for example, is indicated by a function (classifier) optimized based on the past evaluation image and the reference data. The reference database stores, for example, the past evaluation image and the reference data used for the learning data. When the reference database is established with the neural network, a weight variable may be used as the association.

The past evaluation image presents information similar to the above-described evaluation image. The reference data is associated with the past evaluation image. For example, when the past evaluation image is generated based on a sound of a high noise vehicle, information to reflect the fact that it is a high noise vehicle on the evaluation result is used as the reference data.

The reference data includes a plurality of evaluation standards. The reference data, for example, includes an assertive evaluation standard, such as "normal" and "abnormal," and besides, for example, an evaluation standard that expresses a feature of the sound, such as "high in XX Hz" and "possibly felt as noise," may be included.

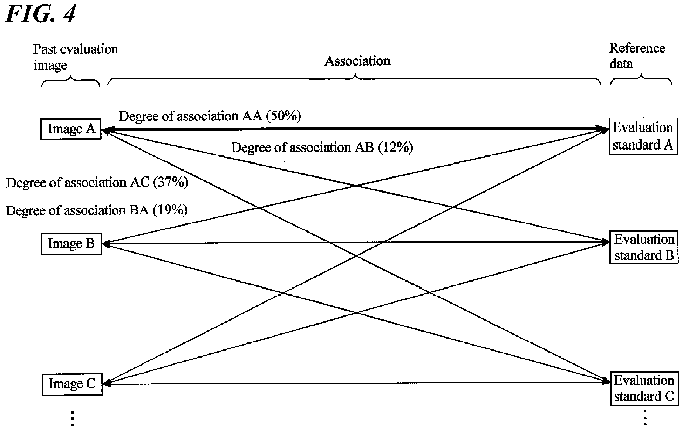

The association indicates, for example, as illustrated in FIG. 4, a degree of a relationship between the past evaluation image and the reference data. Using the association ensures storing a plurality of pieces of image data included in the past evaluation image and a plurality of pieces of evaluation standard data included in the reference data by associating them. In view of this, via the association, the plurality of pieces of evaluation standard data can be associated with one piece of image data, thereby ensuring achieving a derivation of a multifaceted evaluation result. This ensures highly accurately indicating a complicated relationship between the past evaluation image and the reference data, each of which include the plurality of pieces of data, by the association. Accordingly, accuracy of the evaluation result can be improved.

The association includes a plurality of the degrees of association that each associate each image data and each evaluation standard data. The degree of association is, for example, indicated by three levels or more, such as a percentage, ten levels, or five levels, and, for example, indicated by a feature of a line (for example, thickness or the like). For example, an "image A" included in the past evaluation image presents a degree of association AA of "50%" with an "evaluation standard A" included in the reference data, and presents a degree of association AB of "12%" with an "evaluation standard B" included in the reference data. That is, the "degree of association" indicates a degree of connection between each data, and, for example, the higher the degree of association is, the stronger the connection between each data is indicated. The degree of association may be indicated in two levels, such as "associated" or "not associated."

The past evaluation image is stored in the reference database in an image data format based on the spectrogram or the like, and besides, for example, may be stored in a format of a numerical value, a matrix, a histogram, or the like. The reference data is stored in the reference database in a format of a character string or the like, and besides, for example, may be stored in a format of a numerical value, a matrix, a histogram, or the like.

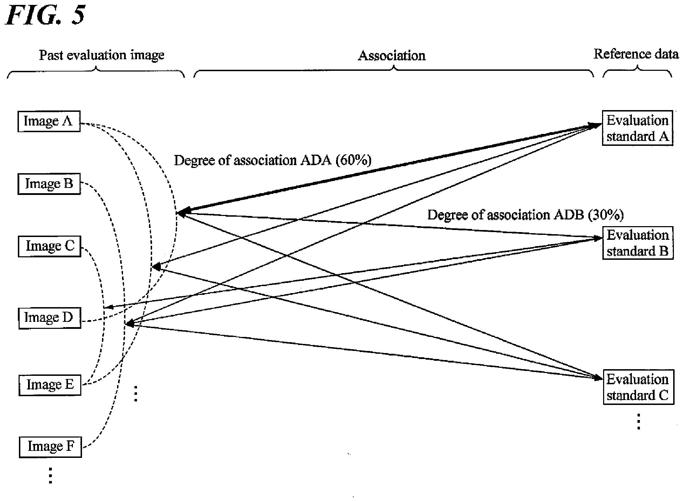

The degree of association may, for example, as illustrated in FIG. 5, associate a combination of the plurality of pieces of image data and one piece of evaluation standard data. For example, a combination of the "image A" and an "image D" included in the past evaluation image presents a degree of association ADA with the "evaluation standard A" of "60%," and presents a degree of association ADB with the "evaluation standard B" of "30%." In this case, for example, even in a case where an evaluation image that is evaluated by referring to the reference database is similar to both the "image A" and the "image D," a quantitative evaluation can be executed.

The reference database may, for example, store a data set of evaluation result derived for the plurality of evaluation standards. In this case, for example, when the "evaluation standard A" is selected, an evaluation result "normal" or the like is derived, and besides, for example, when the "evaluation standard A" and the "evaluation standard B" are selected, an evaluation result "high possibility of abnormal" or the like may be derived. The evaluation result may be derived by using the degree of association as a weight.

When the sensor array is used as the sound pickup device 2, the past evaluation image at the evaluation position 9a and the reference data are used to establish the reference database. In view of this, it is possible to reduce the number of the past evaluation images necessary for establishing the reference database.

FIG. 3B is a schematic diagram illustrating an example of a function of the vehicle sound evaluation device 1. The vehicle sound evaluation device 1 includes the obtaining unit 11, a generating unit 12, a deriving unit 13, an output unit 14, and a storage unit 15, and, for example, an updater 16 may be included. The respective functions illustrated in FIG. 3B are achieved by the CPU 101 executing a program stored in the saving unit 104 or the like by using the RAM 103 as a work area, and, for example, may be controlled by an artificial intelligence or the like.

### <Obtaining Unit 11>

The obtaining unit 11 obtains the time waveform data. The obtaining unit 11 may, for example, obtain a feature regarding the vehicle 8 subject to the time waveform data (for example, a type of vehicle, a type of muffler, the number of the rider/driver's past crackdown, the age of the rider/driver, and the like), and a feature of a peripheral environment (for example, an ordinary road, an expressway, a dense residential area, an arterial road, a place with a large sound emitted from a peripheral area, and the like). In this case, for example, via the input portion 108 and the I/F 106, the user inputs the features as necessary. This ensures obtaining the evaluation result of the time waveform data corresponding to the respective features, thereby ensuring further improved accuracy of the evaluation result. Obtaining or not obtaining each of the features can be conveniently set.

When the sensor array is used as the sound pickup device 2, the obtaining unit 11, for example, as illustrated in FIG. 3C, includes an extracting unit 111. The extracting unit 111 extracts certain time waveform data based on the sound emitted at the evaluation position 9a from a group of the time waveform data (a plurality of pieces of time waveform data) obtained from the sensor array. The extracting unit 111 extracts the time waveform data by, for example, known Beam Forming (delayed sum array). In this case, an extraction condition is preliminarily set based on a relative position of each microphone.

### <Generating Unit 12>

The generating unit 12 generates the plurality of evaluation images based on a part of the time waveform data. The generating unit 12, for example, as illustrated in FIG. 2C, generates the evaluation images (for example, the first evaluation image to the fourth evaluation image) for predetermined time periods (for example, the first period T1 to the fourth period T4) of the time waveform data using the Fourier transformation. The predetermined period and the number of the evaluation image that are generated can be conveniently set.

The generating unit 12 generates the evaluation image by considering the back ground. In this case, the time waveform data while the vehicle 8 is not traveling is preliminarily obtained via the obtaining unit 11 and the evaluation image is generated based on a result of the difference with the time waveform data subject to the evaluation.

### <Deriving Unit 13>

The deriving unit 13 derives the evaluation result for the plurality of evaluation images by referring to the reference database. The deriving unit 13 generates a determination result obtained by executing a determination for each of the plurality of evaluation images, and derives the comprehensively determined result as the evaluation result. The deriving unit 13 derives, for example, the comprehensively determined result as the evaluation result corresponding to a frequency of contents in the determination result, and besides, for example, when there is even one determination result determined as an abnormal or normal sound, the evaluation result that determines as the abnormal or normal sound may be derived.

The deriving unit 13 selects, for example, the plurality of evaluation standards associated with the plurality of evaluation images via the association (classifier). The deriving unit 13 derives, for example, the evaluation result corresponding to the respective evaluation standards using the data set.

The deriving unit 13 selects the evaluation standards with the highest degree of association associated with, for example, the plurality of evaluation images among the obtained plurality of evaluation standards to make it the determination result for the evaluation image. The plurality of evaluation standards may be selected, and in such a case, for example, the evaluation standards associated with the degree of association having a preliminarily set threshold value or more may be selected. The deriving unit 13 derives the evaluation result based on the plurality of determination standards selected for each evaluation image.

The deriving unit 13 may generate, for example, the determination result that has determined whether the feature of the sound is normal or not for each of the selected plurality of evaluation standards, to derive the evaluation result based on a plurality of the determination results. In this case, for example, the evaluation result that reflects the result of comparing the number of the evaluation standards determined to have the normal sound feature among the selected plurality of evaluation standards with the number of the evaluation standards determined to be abnormal may be generated.

The deriving unit 13 selects, when referring to the reference database illustrated in FIG. 4, a past evaluation image (for example, the "image A": the first image data) identical or similar to the evaluation image. As the past evaluation image, an image that partly matches or exactly matches with the evaluation image is selected, and besides, for example, a similar image is selected. A degree of a selected degree of similarity can be conveniently set. As the first image data, the plurality of pieces of image data may be used.

The deriving unit 13 selects the evaluation standard (a first evaluation standard) associated with the selected first image data and a degree of association (for example, the degree of association AA: a first degree of association) between the first image data and the first evaluation standard. For example, the deriving unit 13 selects the first evaluation standard "evaluation standard A" associated with the first image data "image A" and the first degree of association "50%" between the "evaluation standard A" and the "image A" to obtain them as evaluation information. When a plurality of the evaluation standards and degrees of association are selected, in addition to the above-described "evaluation standard A" and "50%," a first evaluation standard "evaluation standard B" associated with the first image data "image A" and a first degree of association "12%" between the "image A" and the "evaluation standard B," and the like may be selected as the first evaluation standard and the first degree of association. The evaluation result is derived based on thus selected first evaluation standard and first degree of association. The deriving unit 13 may derive, for example, the evaluation result by referring to the above-described data set.

### <Output Unit 14>

The output unit 14 outputs the evaluation result. The output unit 14 transmits the evaluation result to the output portion 109 via the I/F 107, and besides, for example, transmits the evaluation result to another terminal and the like via the IIF 105.

The output unit 14 may, for example, determine whether to output the evaluation result to the output portion 109 or the like or not based on the evaluation result. For the determination standard whether to output or not, for example, the user may preliminarily set the threshold value and the like.

### <Storage Unit 15>

The storage unit 15 takes out various data, such as the reference database, saved in the saving unit 104 as necessary. The storage unit 15 saves the various data obtained or generated by each of the components 11 to 14 into the saving unit 104 as necessary.

### <Updater 16>

The updater 16 updates, for example, the reference database. When a relationship between the past evaluation image and the reference data is newly obtained, the updater 16 reflects the relationship on the association. For example, based on the evaluation result derived by the deriving unit 13, the user examines the accuracy of the evaluation result, and when the vehicle sound evaluation device 1 obtains an examination result, the updater 16 updates the association included in the reference database based on the examination result.

### (One Example of Operation of Vehicle Sound Evaluation System 100)

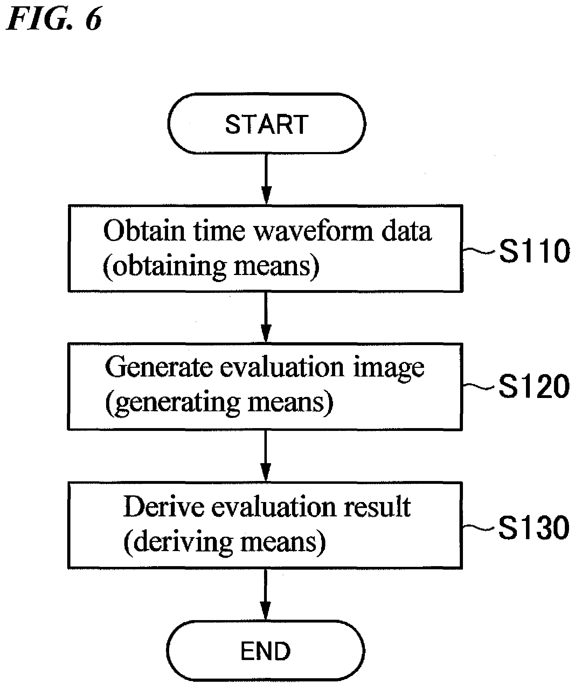

Next, an example of an operation of the vehicle sound evaluation system 100 according to the embodiment will be described. FIG. 6 is a flowchart illustrating the example of the operation of the vehicle sound evaluation system 100 according to the embodiment.

### <Obtaining Means S110>

As illustrated in FIG. 6, the time waveform data based on the sound is obtained (obtaining means S110). The obtaining unit 11 obtains the time waveform data from the sound pickup device 2. The frequency and the timing when the obtaining unit 11 obtains the time waveform data can be conveniently set. The obtaining unit 11 may save, for example, the time waveform data in the saving unit 104 via the storage unit 15.

For example, when the sensor array is used as the sound pickup device 2, the obtaining means S110 may include the extraction means S111. In the extraction means S111, the extracting unit 111 extracts the time waveform data based on the sound emitted at the evaluation position 9a from the group of the time waveform data obtained from the sensor array. In view of this, an environmental sound (noise) emitted from the peripheral environment can be easily removed.

### <Generating Means S120>

Next, a plurality of evaluation images that indicate a time axis, a frequency axis, and a signal strength are generated based on a part of the time waveform data (generating means S120). The generating unit 12, for example, using the Fourier transformation, calculates a frequency to an amplitude during a predetermined period of the time waveform data to generate the evaluation image. The generating unit 12 may, for example, save the evaluation image in the saving unit 104 via the storage unit 15.

### <Deriving Means S130>

Next, with reference to the reference database, the evaluation result for the plurality of evaluation images are derived (deriving means S130). The deriving unit 13 selects, for example, the first image data including the image identical or similar to each of the evaluation images among the past evaluation images stored in the reference database. The deriving unit 13 selects the first evaluation standard associated with the selected first image data in the reference data stored in the reference database, and selects the first degree of association between the first image data and the first evaluation standard. The deriving unit 13 may derive, for example, the evaluation result corresponding to the first evaluation standard by referring to the data set.

The deriving unit 13 may generate, for example, the determination result that has determined whether the feature of the sound is normal or not for each of the first evaluation standards (the plurality of evaluation standards) to derive the evaluation result based on the plurality of determination results.

Afterwards, the output unit 14 outputs the evaluation result to the output portion 109 or the like as necessary, and the operation of the vehicle sound evaluation system 100 in the embodiment is terminated.

### <Updating Means S140>

For example, when a relationship between the past evaluation image and the reference data is newly obtained, the relationship may be reflected on the degree of association (update means S140). The updater 16 updates the association included in the reference database based on the examination result to the evaluation result by the user. The timing and the frequency to execute the updater 16 are conveniently set.

According to the embodiment, the deriving means S130 refers to the reference database to derive the evaluation result for the plurality of evaluation images. In view of this, it is possible to execute the evaluation based on the past evaluation image and the reference data including the sound difference and the like in association with a slight difference of the peripheral environment. This ensures obtaining a highly accurate evaluation result.

According to the embodiment, the generating means S120 generates the plurality of evaluation images based on the part of the time waveform data. In view of this, for example, even when a fixed sound sensor is used, the sound during a certain period from the vehicle 8 approaches till the vehicle 8 moves away can be comprehensively evaluated. This ensures quantitatively evaluating the sound specific to the traveling vehicle.

According to the embodiment, the reference database is established by the machine learning using the past evaluation image and the reference data as the learning data. In view of this, compared with a case where a threshold value is set for a loudness of sound or a similar case, the evaluation from which a subjective view is eliminated can be executed. This ensures a reduced variation of the evaluation results.

According to the embodiment, the deriving means 5130 selects the evaluation standard associated with each of the plurality of evaluation images in the reference data, and generates the determination result that has determined whether the feature of the sound is normal or not based on the plurality of evaluation standards to derive the evaluation result based on the plurality of determination results. In view of this, selecting the evaluation standard associated with each of the evaluation images ensures obtaining the comprehensive evaluation result after executing the determinations independently for each evaluation image. This ensures obtaining the highly accurate evaluation result even when, for example, the traveling sound varies due to the shape of the road surface and the like.

According to the embodiment, the extracting means S111 extracts the time waveform data based on the sound emitted at the evaluation position 9a from the group of the time waveform data obtained from the sensor array. In view of this, the environmental sound (noise) emitted from the peripheral environment can be easily removed. This ensures obtaining further a highly accurate evaluation result. In particular, fixing the evaluation position 9a ensures the reduced number of the past evaluation images necessary for establishing the reference database. This ensures achieving the reduced time for preparing the past evaluation images and the reduced data capacity stored in the reference database.

According to the embodiment, the deriving unit 13 refers to the reference database to derive the evaluation result for the plurality of evaluation images. In view of this, it is possible to execute the evaluation based on the past evaluation image and the reference data including the sound difference and the like in association with a slight difference of the peripheral environment. This ensures obtaining a highly accurate evaluation result.

According to the embodiment, the generating unit 12 generates the plurality of evaluation images based on the part of the time waveform data. In view of this, for example, even when a fixed sound sensor is used, the sound during a certain period from the vehicle 8 approaches till the vehicle 8 moves away can be comprehensively evaluated. This ensures quantitatively evaluating the sound specific to the traveling vehicle.

While the embodiment of the present invention has been described, this embodiment has been presented by way of example only, and are not intended to limit the scope of the invention. It should be noted and understood that there can be improvements and modifications made of the present invention described in detail above without departing from the scope of the invention as set forth in the accompanying claims.

### [Description of Reference Signs]

- 1:: Vehicle Sound Evaluation Device
- 10:: Housing
- 11:: Obtaining unit
- 12:: Generating Unit
- 13:: Deriving Unit
- 14:: Output Unit
- 15:: Storage Unit
- 16:: Updater
- 2:: Sound Pickup Device
- 8:: Vehicle
- 9:: Road
- 9a:: Evaluation Position
- 100:: Vehicle Sound Evaluation System
- 101:: CPU
- 102:: ROM
- 103:: RAM
- 104:: Saving Unit
- 105:: I/F
- 106:: I/F
- 107:: I/F
- 108:: Input Portion
- 109:: Output Portion
- 110:: Internal Bus
- 111:: Extracting unit
- S110:: Obtaining Means
- S111:: Extracting Means
- S120:: Generating Means
- S130:: Deriving Means
- S140:: Updating Means

## Claims

1. A vehicle sound evaluation system (100) that evaluates a sound emitted from a vehicle (8) that is traveling, the vehicle sound evaluation system (100) comprising:
obtaining means (S110) adapted to obtain time waveform data based on the sound;
generating means (S120) adapted to generate a plurality of evaluation images indicating a time axis, a frequency axis, and a signal strength based on a part of the time waveform data;
a reference database adapted to store an association between a preliminarily obtained past evaluation image and reference data associated with the past evaluation image; and
deriving means (S130) adapted to refer to the reference database to derive an evaluation result for the plurality of evaluation images;
**characterized in that**
the plurality of evaluation images is transformed from the time waveform data using Fourier transformation, or is expressed in a three-dimensional graph that expresses the signal strength in color with respect to a time on a horizontal axis, and the frequency on a vertical axis based on the part of the time waveform data; and
wherein the generating means (S120) is adapted to generate the evaluation images based on a result of the difference between the time waveform data obtained by the obtaining means (S110) and a preliminarily obtained time waveform data while the vehicle (8) is not traveling.

2. The vehicle sound evaluation system (100) according to claim 1, wherein
the reference database is established by machine learning using the past evaluation image and the reference data as learning data.

3. The vehicle sound evaluation system (100) according to claim 1 or 2, wherein the reference data includes a plurality of evaluation standards, and the deriving means (S130) is adapted to:
select the evaluation standard associated with each of the plurality of evaluation images and
is further adapted to generate a determination result that has determined whether a feature of the sound is normal or not for each of the plurality of evaluation standards to derive the evaluation result based on the plurality of determination results.

4. The vehicle sound evaluation system (100) according to any one of claims 1 to 3, wherein
the obtaining means (S110) includes extracting means (S111) that, from a group of time waveform data obtained from a sensor array including a plurality of sound sensors arranged toward a road, extracts the time waveform data based on the sound emitted at an evaluation position preliminarily set within the road.

## Patentansprüche

1. Fahrzeuggeräusch-Bewertungssystem (100), das ein von einem fahrenden Fahrzeug (8) abgegebenes Geräusch bewertet, wobei das Fahrzeuggeräusch-Bewertungssystem (100) umfasst:
Erhaltungsmittel (S110), die angepasst sind, Zeitwellenformdaten basierend auf dem Geräusch zu erhalten;
Erzeugungsmittel (S120), die angepasst sind, basierend auf einem Teil der Zeitwellenformdaten mehrere Bewertungsbilder zu erzeugen, die eine Zeitachse, eine Frequenzachse und eine Signalstärke angeben;
eine Referenzdatenbank, die angepasst ist, eine Zuordnung zwischen einem vorläufig erhaltenen früheren Bewertungsbild und Referenzdaten zu speichern, die mit dem früheren Bewertungsbild verknüpft sind; und
Ableitungsmittel (S130), die angepasst sind, auf die Referenzdatenbank zurückzugreifen, um ein Bewertungsergebnis für die mehreren Bewertungsbilder abzuleiten;
**dadurch gekennzeichnet, dass**
die mehreren Bewertungsbilder aus den Zeitwellenformdaten unter Verwendung einer Fourier-Transformation transformiert oder in einem dreidimensionalen Diagramm ausgedrückt werden, das die Signalstärke in Farbe in Bezug auf eine Zeit auf einer horizontalen Achse und die Frequenz auf einer vertikalen Achse basierend auf dem Teil der Zeitwellenformdaten ausdrückt; und
wobei die Erzeugungsmittel (S120) angepasst ist, die Bewertungsbilder basierend auf einem Ergebnis der Differenz zwischen den von den Erhaltungsmitteln (S110) erhaltenen Zeitwellenformdaten und vorläufig erhaltenen Zeitwellenformdaten zu erzeugen, während das Fahrzeug (8) nicht fährt.

2. Fahrzeuggeräusch-Bewertungssystem (100) nach Anspruch 1, wobei
die Referenzdatenbank durch maschinelles Lernen erstellt wird, wobei das vergangene Bewertungsbild und die Referenzdaten als Lerndaten verwendet werden.

3. Fahrzeuggeräusch-Bewertungssystem (100) nach Anspruch 1 oder 2, wobei
die Referenzdaten eine Mehrzahl von Bewertungsstandards umfassen, und
das Ableitungsmittel (S130) angepasst ist
den Bewertungsstandard auszuwählen, der jedem der mehreren Bewertungsbilder zugeordnet ist, und ferner angepasst ist
ein Bestimmungsergebnis zu erzeugen, das für jeden der mehreren Bewertungsstandards ermittelt hat, ob ein Merkmal des Klangs normal ist oder nicht, um das Bewertungsergebnis basierend auf den mehreren Bestimmungsergebnissen abzuleiten.

4. Fahrzeuggeräusch-Bewertungssystem (100) nach einem der Ansprüche 1 bis 3, wobei
die Erhaltungsmittel (S110) Extraktionsmittel (S111) umfasst, die aus einer Gruppe von Zeitwellenformdaten, die von einem Sensorarray, enthaltend mehrere in Richtung einer Straße angeordnete Geräuschsensoren, erhalten wurden, die Zeitwellenformdaten basierend auf dem abgegebenen Geräusch an einer Bewertungsposition extrahiert, die vorab innerhalb der Straße festgelegt wurde.

## Revendications

1. Système d'évaluation du son de véhicule (100) qui évalue un son émis par un véhicule (8) en mouvement, le système d'évaluation du son d'un véhicule (100) comprenant :
des moyens d'obtention (S110) adaptés pour obtenir des données de forme d'onde temporelle basées sur le son ;
des moyens de génération (S120) adaptés pour générer une pluralité d'images d'évaluation indiquant un axe temporel, un axe de fréquence et une intensité de signal sur la base d'une partie des données de forme d'onde temporelle ;
une base de données de référence adaptée pour stocker une association entre une image d'évaluation antérieure obtenue au préalable et des données de référence associées à l'image d'évaluation antérieure ; et
des moyens d'analyse (S130) adaptés pour se référer à la base de données de référence afin de fournir un résultat d'évaluation pour la pluralité d'images d'évaluation ;
**caractérisé en ce que** la pluralité d'images d'évaluation est transformée à partir des données de forme d'onde temporelle au moyen d'une transformation de Fourier, ou est exprimée dans un graphique tridimensionnel qui renvoie l'intensité du signal en couleur en fonction du temps établi sur un axe horizontal, et de la fréquence sur un axe vertical sur la base de la partie des données de forme d'onde temporelle ; et
dans lequel les moyens de génération (S120) sont adaptés pour générer les images d'évaluation sur la base d'un résultat de la différence entre les données de forme d'onde temporelle obtenues par les moyens d'obtention (S110) et des données de forme d'onde temporelle obtenues au préalable alors que le véhicule (8) ne roule pas.

2. Système d'évaluation du bruit des véhicules (100) selon la revendication 1, dans lequel la base de données de référence est établie par apprentissage automatique en utilisant l'image d'évaluation passée et les données de référence comme données d'apprentissage.

3. Le système d'évaluation sonore de véhicule (100) selon la revendication 1 ou 2, dans lequel les données de référence comprennent une pluralité de normes d'évaluation, et les moyens d'analyse (S130) sont adaptés pour sélectionner la norme d'évaluation associée à chacune de la pluralité d'images d'évaluation et sont en outre adaptés pour générer un résultat de détermination qui a déterminé si une caractéristique du son est normale ou non pour chacune de la pluralité de normes d'évaluation afin de fournir le résultat d'évaluation sur la base de la pluralité de résultats de détermination.

4. Le système d'évaluation sonore de véhicule (100) selon l'une quelconque des revendications 1 à 3, dans lequel les moyens d'obtention (S110) comportent des moyens d'extraction (S111) qui, à partir d'un groupe de données de forme d'onde temporelle obtenues à partir d'un réseau de capteurs comprenant une pluralité de capteurs sonores disposés vers une route, extraient les données de forme d'onde temporelle basées sur le son émis à une position d'évaluation préalablement définie dans la route.
